# EUROPEAN PATENT APPLICATION

(11) **EP 3 012 114 A1**
(43) Date of publication of application: **27.04.2016**
(21) Application number: 15003038.5
(22) Date of filing: 23.10.2015
(51) Int. Cl.: B44C 1/17, C09D 9/00, C09J 5/00, C09J 121/00

(54) **MULTIPLE LAYER DECALCOMANIA AND METHOD OF APPLICATION / REMOVAL OF THE SAME**

(30) Priority: 24.10.2014 IT VI20140276
(71) Applicant: Ferappi Rosalba, 36051 Creazzo (Vicenza) (IT)
(72) Inventor: Ferappi Rosalba, 36051 Creazzo (Vicenza) (IT)
(74) Representative: Maroscia, Antonio

(57) **Abstract**

A multilayered decal (1) comprising at least one supporting substrate (2) made of a paper, plastic, textile or the like material, having a face (3) printed with one or more inks, defining an image (4) that is visible through the supporting substrate (2), a protection layer (7) made of a polymeric material that overlies the printed face (3), and a first adhesive layer (8) having a first adhesion strength value, and disposed on the face (9) of the protection layer (7) that faces away from supporting substrate (2) designed to contact the surface (S) and a backing layer (11) that contacts the supporting substrate (2). The backing layer (11) has a self-adhesive sheet (13) on its face (12) facing away from the supporting substrate (2), which sheet has a second adhesive layer (15) whose adhesion strength value differs from that of the first layer, in contact with the backing layer (11). The self-adhesive sheet (13) is designed to be removed with said backing layer (11) upon application of the decal (1) to the surface (S) and to be applied to the supporting substrate (2) to remove the decal (1) from the surface (S). A method of removal and application of the multilayered decal (1).

## Description

### Field of the invention

The present invention generally finds application in the field of transferable decorative elements and particularly relates to a multilayered decal.

The invention also relates to a method of application and removal of the multilayered decal.

### Background art

Decals have been long known to be used in the field of transferable decorative elements, for application to various types of surfaces and creation of ornamental designs.

Typically, decals comprise a printed support layer, defining the ornamental design of the decal, which is associated with a coating layer, preferably made of silicone-coated paper and acting as a backing for the printed layer before application.

A protection layer may be possibly provided on the side that faces away from the coating layer and adapted to be removed before application of the decal.

Furthermore, an adhesive is distributed on the printed layer, for the latter to be adhered to the surface to be decorated.

A first drawback of these prior art arrangements is that removal of decals is particularly complex and time-consuming.

Indeed, removal of the printed layer from the application surface requires the use of special tools or particular chemicals that can promote release of the adhesive from the surface.

For example, the printed layer is removed from application surfaces using chemicals such as solvents or the like which, in certain cases, are particularly aggressive and may damage or alter the application surface and/or the print on the decal.

Furthermore, spatulas, doctor blades or scrapers are often used to remove the printed layer, and are likely to scratch both the surface and the print of the ornamental design.

Also, the use of such tools requires some skill and expertise for the user to achieve complete, optimal removal of the decal.

In an attempt to at least partially obviate these drawbacks, systems for reliable removal of decorative elements have been conceived.

JPH07118580 discloses a transferable decorative element that can be easily removed from an application surface using an appropriate multilayer removal element.

Particularly, the removal element comprises a rigid layer and an adhesive layer overlying the latter and having an outer surface designed for adhesion to the decorative element to be removed.

The removal of the decorative element is effected by initially adhering its outer surface to the removal element and then detaching the latter from the application surface.

A first drawback of this arrangement is that the removal element and the decorative element are distinct and separate, which involves an increase of the number of the system-associated parts.

This drawback involves a particularly complex use of the system, as the user is required to keep both the print-supporting layer and the removal element.

Furthermore, the great number of parts contributes to increase the dimensions of the whole system and adds complexity to the process of transportation and storage thereof.

An additional drawback of this arrangement is that the removal element has a relatively low rigidity and is likely to bend back as it is detached from the surface.

This drawback contributes to affect the integrity of the decorative element as it is being removed and makes it unusable for further application.

### Technical Problem

In light of the prior art, the technical problem to be solved by the present invention is to provide an easily removable and particularly simple multilayered decal that has a small size and maintains its integrity even after removal.

### Disclosure of the invention

The object of the present invention is to overcome the above drawbacks, by providing a multilayered decal and a method of application and removal thereof that are highly efficient and relatively cost-effective.

A particular object of the present invention is to provide a multilayered decal that can be easily removed from the application surface.

Another object of the present invention is to provide a multilayered decal that is particularly simple and has a small number of parts.

A further object of the present invention is to provide a multilayered decal that can can be easily transported and stored and has small dimensions.

Yet another object of the present invention is to provide a multilayered decal whose parts maintain a certain rigidity during use, to facilitare removal.

A further object of the present invention is to provide a method of application and removal of the multilayered decal that does not involve the use of aggressive chemicals or mechanical removal devices.

Another important object of the present invention is to provide a method of removal of the multilayered decal that allows the latter to maintain its integrity once it has been removed.

These and other objects, as better explained hereafter, are fulfilled by a multilayered decal as defined in claim 1.

In other aspects, the invention provides methods for application and removal of the multilayered decal as defined in claims 9 and 10 respectively.

Advantageous embodiments of the invention are obtained in accordance with the dependent claims.

### Brief description of the drawings

Further features and advantages of the invention will be more apparent upon reading the detailed description of a preferred, non-exclusive embodiment of a multilayered decal and a method of application and removal of the decal of the invention, which are described as a nonlimiting example with the help of the annexed drawings, in which:
FIG. 1 is a perspective view of the multilayered decal of the invention in a first configuration, with a first enlarged detail;
FIG. 2 is a perspective view of the multilayered decal of the invention in a second configuration;
FIG. 3 is a broken-away lateral view of the multilayered decal of Fig. 2;
FIGS. 4 to 9 are perspective and front views of respective steps of the methods of application and removal of the multilayered decal of Fig. 2.

### Detailed description of a preferred embodiment

The above mentioned figures show a multilayered decal generally designated by numeral 1, which is designed to be applied to a surface S to create decorative designs or indication elements having different shapes and sizes.

The surface S may be made of different materials, such as glass, ceramic, plastic or other similar materials, provided it is a flat surface with no discontinuity or roughness that might affect adhesion of the decal.

The multilayered decal 1 may have different shapes and sizes, which may be varied without affecting its adhesion properties.

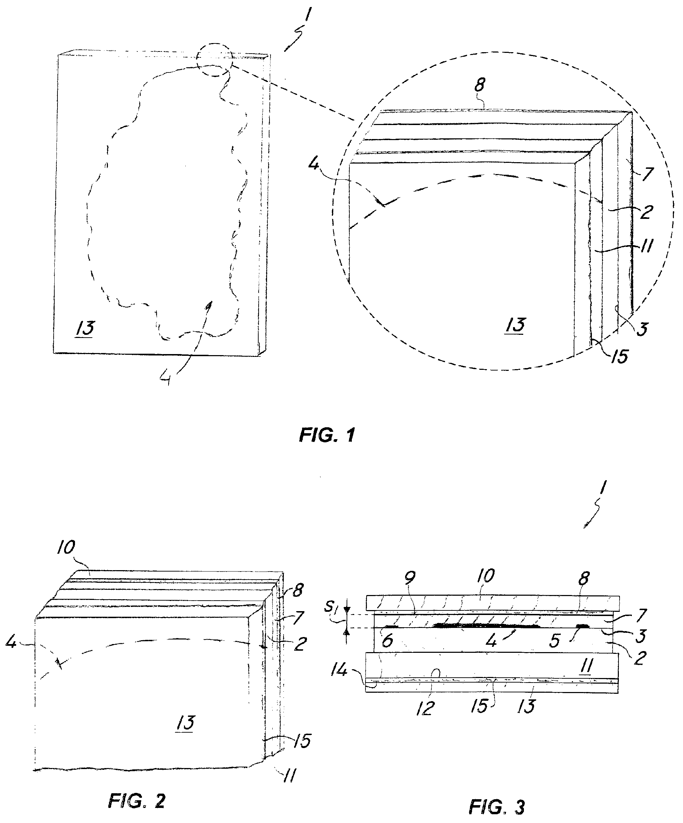

In the basic configuration, as shown in FIG. 1, the decal 1 comprises a supporting substrate 2 having a face 3 printed with one or more inks, which defines the image 4 of the decal.

The supporting substrate 2 may be made of a paper, plastic, textile or the like material, that can make the image 4 of the decal 1 at least partially visible.

The use of these materials allows the image 4 to be printed with single- or multi-color inks using various types of printing techniques, such as silk-screen printing, digital printing, offset printing and other similar techniques in a particularly effective manner.

Furthermore, the printed face 3 of the supporting substrate 2 may comprise a peripheral frame 5 formed with a continuous or broken ink line.

The peripheral frame 5 may define a reference edge 6 having a margin m ranging from 1 to 2 cm and adapted to be used as a reference during application of the decal 1 to the surface S.

The decal 1 further comprises a protection layer 7 made of a polymeric material, overlying the printed face 3.

The base material of the protection layer 7 may be selected from the group comprising silicone resins and the like, and may be dried after deposition, to be cured and form an elastic film.

The elastic film will be adapted to trap the ink of the printed face 3 therein, such that the ink may be protected and great flexibility may be imparted to it.

Furthermore, the protection layer 7 may have a thickness s₁ ranging from 0.1 mm to 3mm, preferably from 0.2mm to 2mm, to reduce the overall size of the entire system.

A first adhesive layer 8 is provided, as best shown in FIG. 3, which has a first adhesion strength value and is disposed on the face 9 of the protection layer 7 opposite to the supporting substrate 2 designed to contact the surface S.

Conveniently, the decal may comprise a silicone-coated paper sheet 10 which is at least as large as the supporting substrate 2 overlying the first adhesive layer 8.

The silicone-coated paper sheet 10 is adapted to prevent contact and adhesion of the first adhesive layer 8 to the surface S and is designed for removal therefrom at the time of application.

Furthermore, the silicone-coated paper sheet 10 can prevent the deposition of impurities on the first adhesive layer 8, which might affect adhesion of the supporting substrate layer 2 on the surface S, and cause the formation of wrinkles and creases.

According to a peculiar aspect, the invention provides a backing layer 11, as best shown in the right panel of FIG. 1 and in FIG. 3, which contacts the supporting substrate 2 to facilitate manipulation of the decal 1 before application thereof to the surface S.

Furthermore, the backing layer 11 has a self-adhesive sheet 13 on the face 13 facing away from the supporting substrate 2.

The self-adhesive sheet 13 has a second adhesive layer 15 on the face 14 that contacts the backing layer 11, whose adhesion rate differs from that of the first adhesive layer and, upon application of the decal 1 to the surface S, it can be removed with the backing layer 11 and later applied to the supporting substrate 2 to remove the decal 1 from the surface S.

Therefore, the decal 1 has a simple use and very small dimensions, because the element for removal thereof is formed at the same time as it and is associated with it until application.

Advantageously, the first adhesive layer 8 may have a lower adhesion strength value than the second adhesive layer 15, such that a very little pulling force is required to be exerted by the user to remove the supporting substrate 2.

Furthermore, this feature will reduce the risk that the supporting substrate 2 might be broken or torn during removal, such that it will maintain its integrity and be also possibly reused.

Conveniently, the backing layer 11 may be made of an elastic material selected from the group comprising silicone resins or the like.

Silicone resins are more rigid than other materials that are used for the same purpose, and prevent the backing layer 11 from folding or curling upon removal, thereby maintaining its integrity.

Conveniently, the self-adhesive sheet 13 may be either removable from the backing layer 11 or have a non-adhering film, not shown, on the face 14 that faces the backing layer 11, with a third adhesive having a higher adhesion rate than the first adhesive layer 8 laying over such film.

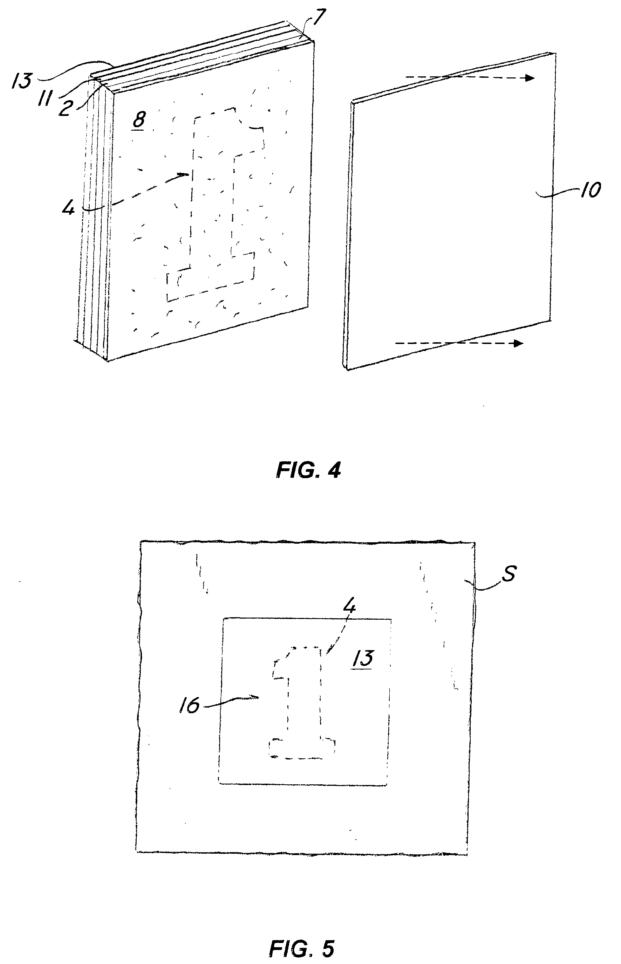

In a further aspect, the invention relates to a method of application of the multilayered decal 1, whose steps are shown in FIGS. 4 to 6.

Particularly, the method includes a step a), as shown in FIG. 4, of removing the silicone-coated paper sheet 10 from the first adhesive layer 8, which is followed by a step b) of positioning the supporting substrate 2 on the application surface S with the first adhesive layer 8 facing it, as best shown in FIG. 5.

The step b) is carried out using the peripheral frame 5 on the printed face 3 as a reference and guide.

Advantageously, the step a) may be preceded by a possible step of cleaning the application surface S, for removing any impurity that might affect adhesion of the decal 1.

The step b) is followed by a step c) of applying a pressure of predetermined value to the backing layer 11 at the peripheral edge 6 to promote adhesion thereof to the surface S with the first adhesive layer 8.

Particularly, the action exerted on the backing layer 11 may be promoted by the pressure exerted by the user's hands on the self-adhesive sheet 13.

Then, the application method includes a step d) of applying a final pressure of higher value to the backing layer 11 at the middle 16 of the supporting substrate 2 and the printed face 3 to promote the complete adhesion of the decal 1 to the surface S.

Gradual and progressive performance of the steps c) and d) of the method facilitates uniform adhesion of the first adhesive layer 8 and homogeneous distribution of the image 4 on the application surface S.

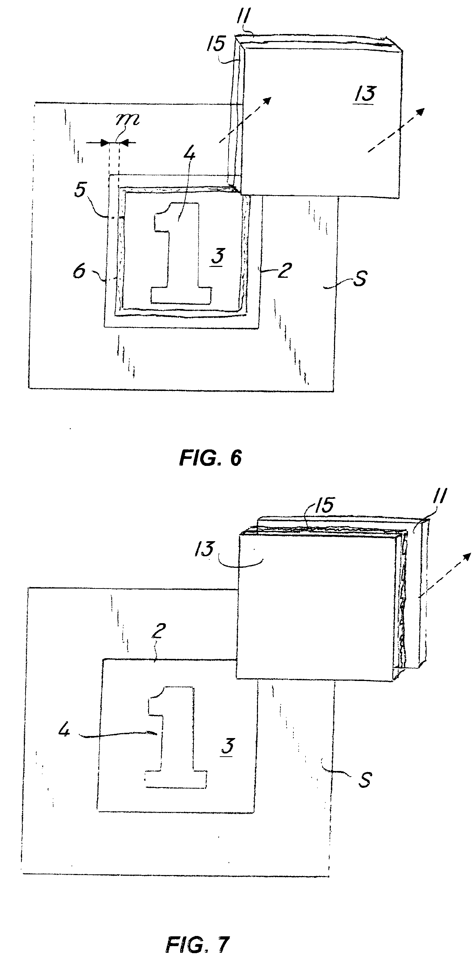

Finally, the method includes an end step e) of removing the backing layer 11, as shown in FIG. 6, to make the image 4 applied to the surface S completely visible.

The backing layer 11 will have the self-adhesive sheet 13 associated therewith, and both may be stored in an appropriate place until possible removal of the decal 1.

The step e) may be followed by a step of removing the portions of the peripheral frame 5 adhered to the surface S from such surface, using a scraper or a doctor blade.

In a further aspect, the invention relates to a method of removal of the multilayered decal 1 from a surface S upon which it was previously applied.

This method includes a step f) of separating the self-adhesive sheet 13 from the backing layer 11, as shown in FIG. 7, and a step g) of folding back a lateral strip of the self-adhesive strip 13 to form a finger grip portion.

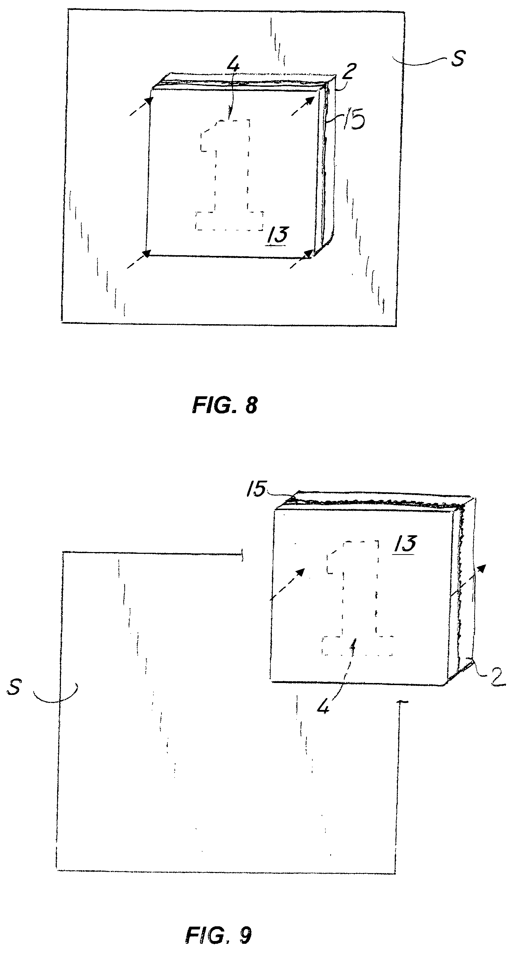

There are also a step g) of applying the self-adhesive sheet 13 to the supporting substrate 2 at the printed face 3, as shown in FIG. 8, and a step i) of peeling off the decal 1 by exerting a pulling force on the self-adhesive sheet 13, at the finger grip portion, away from the surface S, as shown in FIG. 9.

Furthermore, the self-adhesive sheet 14 may have a non-adhering film, similar to what has been described above.

The multilayered decal and the methods of application and removal thereof according to the invention are susceptible to a number of changes or variants, within the inventive concept as disclosed in the annexed claims.

All the details thereof may be replaced by other technically equivalent parts, and the materials may vary depending on different needs, without departure from the scope of the invention.

While the decal and the application and removal methods have been described with particular reference to the accompanying figures, the numerals referred to in the disclosure and claims are only used for the sake of a better intelligibility of the invention and shall not be intended to limit the claimed scope in any manner.

### Industrial applicability

The present invention may find application in industry, because it can be produced on an industrial scale in factories for printing transferable decorative elements.

## Claims

1. A multilayered decal (1) for removable application to a surface (S), comprising at least:
- a substrate (2) made of a paper, plastic, textile or similar material, having a face (3) printed with one or more inks defining a decal image (4), said image (4) being at least partially visible through said substrate (2);
- a protection layer (7) made of a polymeric material superimposed to said printed face (3);
- a first adhesive layer (8) having a first adhesion strength value, said first adhesive layer (8) being arranged on the face (9) of said protection layer (7) opposite to said substrate (2) designed to come into contact with the surface (S);
**characterized in that** a backing layer (11) is provided to engage said substrate (2) to ease manipulation of the decal (1) prior to its application on the surface (S), said backing layer (11) having on its face (12) opposite to said substrate (2) a self-adhesive sheet (13) which has on its face (14) in contact with said backing layer (11) a second adhesive layer (15) having an adhesion strength value different from the first one said self-adhesive sheet (13) together with said backing sheet (11) being removable after application of the decal (1) on the surface (S) and being applicable onto said substrate (2) to remove the decal (1) from the surface (S).

2. Decal as claimed in claim 1, **characterized in that** said first adhesive layer (8) has an adhesion strength value lower than the adhesion strength value of said second adhesive layer (15).

3. Decal as claimed in claim 1, **characterized in that** said self-adhesive sheet (13) has on its face (14) oriented towards said backing layer (11) a non-stick film onto which a third adhesive is superimposed having an adhesion rate bigger than that one of said first adhesive layer (8).

4. Decal as claimed in claim 1, **characterized in that** said protection layer (7) has a thickness (s₁) comprised between 0,1mm and 3mm and preferably comprised between 0,2mm and 2mm.

5. Decal as claimed in claim 1, **characterized in that** the base material of said protection layer (7) is chosen in the group comprising the polymeric materials including the silicone or similar resins.

6. Decal as claimed in claim 1, **characterized in that** the base material of said backing layer (11) is chosen in the group comprising the silicone resins or similar.

7. Decal as claimed in claim 1, **characterized by** comprising a silicone paper sheet (10) having at least the same extension as the substrate (2) overlapped to said first adhesive layer (8) to avoid the contact and the adhesion thereof to the surface (S).

8. Decal as claimed in one or more of the preceding claims, **characterized in that** said printed face (3) comprises a peripheral frame (5) with a continue or discontinue ink line to define an edge (6) used as reference during the application of the decal (1) to the surface (S).

9. Method for applying a multilayered decal (1) as claimed in or more of the preceding claims, comprising the following steps:
a) removing said silicone paper sheet (10) from said first adhesive layer (8);
b) positioning said substrate (2) to the surface (S) with said first adhesive layer (8) oriented thereto using as reference and guide said peripheral frame (5);
c) applying a pressure with predetermined value onto said backing layer (11) in proximity of said peripheral edge (6) to promote the adhesion on the surface (S) with said first adhesive layer (8);
d) applying a final bigger pressure onto said backing layer (11) in proximity of the central portion (16) of said substrate (2) and said printed face (3) to promote the complete adhesion of the decal (1) to the surface (S);
e) removing said backing layer (11).

10. Method of removing a multilayered decal (1) as claimed in or more of the preceding claims from a surface (S) onto which it is previously applied, comprising the following steps:
f) detaching said self-adhesive sheet (13) from said backing layer (11);
g) folding a side strip of said self-adhesive sheet (13) to obtain a handle portion (17);
h) applying said self-adhesive sheet (13) to said substrate (2) in proximity of said printed face (3);
i) removing the decal (1) by pulling out it and exerting on said self-adhesive sheet (13) a traction force in direction away from the surface (S) in proximity of said handle portion.
